(19) Europäisches Patentamt
European Patent Office
Office européen des brevets

(11) **EP 2 112 646 A2**

(12) **EUROPEAN PATENT APPLICATION**

(43) Date of publication:
**28.10.2009 Bulletin 2009/44**

(51) Int Cl.:
*G09G 3/32* *(2006.01)*

(21) Application number: **09156564.8**

(22) Date of filing: **30.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **31.03.2008 US 72597 P**

(71) Applicant: **Element Labs, Inc.**
**Santa Clara CA 95054 (US)**

(72) Inventor: **Elliot, Grant Arthur John**
**Hong Kong, Hong Kong (CN)**

(74) Representative: **Brochard, Pascale**
**Osha Liang**
**32 avenue de l'Opéra**
**75002 Paris (FR)**

(54) **GPU video processing and color correction**

(57) A method of correcting optical variations in a light-emitting display having a plurality of pixels includes transmitting correction transformation information from at least one of the plurality of pixels to a centralized display control module comprising a GPU, determining a correction transformation based on the correction transformation information by the centralized display control module, modifying a source signal based upon the correction transformation using the GPU, thereby creating a corrected signal, and displaying the corrected signal within the light-emitting display.

200 Figure 2

**Description**

BACKGROUND OF INVENTION

Field of the Invention

Embodiments disclosed herein generally relate to a light-emitting display with pixels for use in various industries. More specifically, embodiments disclosed herein relate to an improved method of correcting optical variations in a light-emitting display with pixels.

Description of the Related Art

Display units for entertainment, architectural, and advertising purposes have commonly been constructed from numbers of light-emitting elements, such as light-emitting diodes ("LEDs") or incandescent lamps mounted onto flat panels. These light-emitting elements may be selectively turned on-and-off to create patterns, graphics, and video displays for both informational and aesthetic purposes. It is well known to construct these displays of tiles or large panels, each containing several light-emitting elements, which may be assembled in position for an entertainment show or event, or as an architectural or advertising display. Examples of such systems are disclosed in U.S. Patent Nos. 6,813,853, 6,704,989, 6,677,918, and 6,314,669.

Large video displays used in advertising, sports, and other public video applications are built using a combination of plastic or metal housing and structural components. These video displays generally house a circuit board containing light-emitting diodes, power distribution, data distribution, and driver electronics. The assemblies are well known and may be supplied as single pixels, as described by Yoksza et al in U.S. Patent No. 5,410,328, multiple pixel strips, as disclosed by Masanobu Miura in U.S. Patent No. 5,268,828, or multi pixel modules, as described by Matsumura et al in U.S. Patent No. 5,785,415. Further, modifications and refinements of these basic designs are well known and may include the substitution of surface mount emitters for pin through-hole emitters.

In pixel displays using LEDs, every single pixel is generally unique in that each LED within the pixel may have different optical characteristics. Thus when displaying solid colors ("flat field") the display may be non-uniform which in terms of the perceived difference to a human observer, takes the form of brightness ("luminance" or "luminous intensity") and color ("chromaticity") discrepancies. In order to ensure a uniform display in a LED display, the brightness of each LED within each pixel needs to be adjusted based on either of these variations.

In typical systems known in the art, the luminance and chromaticity of pixels may be measured using devices such as; imaging photometers, spectrometers, luminance meters and colorimeters. These systems may use a charge-coupled device ("CCD") or CMOS camera combined with a series of filters to measure both luminance and chromaticity. Luminance is typically measured in the units of candela per square meter (sometimes referred to as NIT), while perceived chromaticity is reported in a three variable coordinate basis defined by International Commission on Illumination in the CIE 1931 specification.

In imaging systems, often the colorspace of the source material and that of the display device are different. An example of this is that the source material may be of NTSC video format having the corresponding NTSC colorspace, yet the colorspace of the LED video display device is significantly different. Colorspace conversion techniques are used to ensure that the perceived color on the display device are as close to the original source material as possible. Common colorspace conversion techniques are well known in the art, such as the technique described in "Derivation of Basic Television Color Equations," SMPTE RP177-1993. These conversion techniques determine matrix transformations between various colorspaces. A typical conversion will involve a three dimensional source signal often Red, Green and Blue or RGB), a three dimensional destination signal (R', G' and B'), and a three by three matrix representing the transformation. Generally, the source signal is the original signal that is intended to be displayed. However, the destination signal is that which is applied to the display device which may have a different colorspace (discussed above) to that of the source. The transformation matrix may then represent the change in source signal due to the alternate colorspace of the LED display. Multiplying the source signal by a transformation matrix results in a destination signal which, when applied to the display device, provides an image in which the perceived colors are the same as those of the source signal.

In the case of a LED display, each pixel element has a unique colorspace and so to ensure an accurate image on the display, the color space conversion techniques as described above need to be applied on a pixel by pixel basis. Utilizing such colorspace conversion techniques makes it possible to "correct" the source signal to achieve a destination signal that accurately represents the source signal when output to the LED display. Consequently for a flat field or uniform source signal the perceived output of the LED display is uniform. However, for every pixel in a display system, this may require, for example, multiplying a three-by-three matrix by a three-by-one matrix to achieve the conversion. In large scale systems, such as those discussed above and common within the light-emitting display industry, these colorspace conversion techniques may become highly demanding of computational resources.

SUMMARY OF THE INVENTION

A method of correcting optical variations in a light-emitting display having a plurality of pixels, the method includes transmitting correction transformation information from at least one of the plurality of pixels to a centralized display control module comprising a GPU, determining a correction transformation based on the correction transformation information by the centralized display control module, modifying a source signal based upon the correction transformation using the GPU, thereby creating a corrected signal, and displaying the corrected signal within the light-emitting display.

A method of correcting optical variations in a light-emitting display having a plurality of pixels includes transmitting a first signal from a centralized display control module comprising a GPU to the light-emitting display, displaying a destination signal based on the first signal within the light-emitting display, measuring an optical or electrical property corresponding to the displayed destination signal from at least one of the plurality of pixels of the light-emitting display, transmitting the measured optical or electrical property to the centralized screen control module, deriving a correction transformation based upon the measured optical property of the at least one of the plurality of pixels using the centralized screen control module, generating a second signal in the centralized screen control module, applying the correction transformation to the second signal using the GPU, thereby creating a corrected second signal, and displaying the corrected second signal within the light-emitting display.

A method of correcting optical variations in a light-emitting display having at least one pixel including generating a source signal in a centralized screen control module comprising a GPU, applying a correction transformation to the source signal using the GPU, thereby creating a corrected signal, and displaying the corrected second signal within the light-emitting display.

A light-emitting display with corrected optical variations includes a plurality of pixels, a panel control module connected to each of the plurality of pixels, and a centralized screen control module comprising a GPU connected to the panel control module.

BRIEF DESCRIPTION OF DRAWINGS

Fig. 1 shows a display system according to embodiments disclosed herein.
Fig. 2 shows a display system according to embodiments disclosed herein.

DETAILED DESCRIPTION

Specific embodiments of the present disclosure will now be described in detail with reference to the accompanying figures.

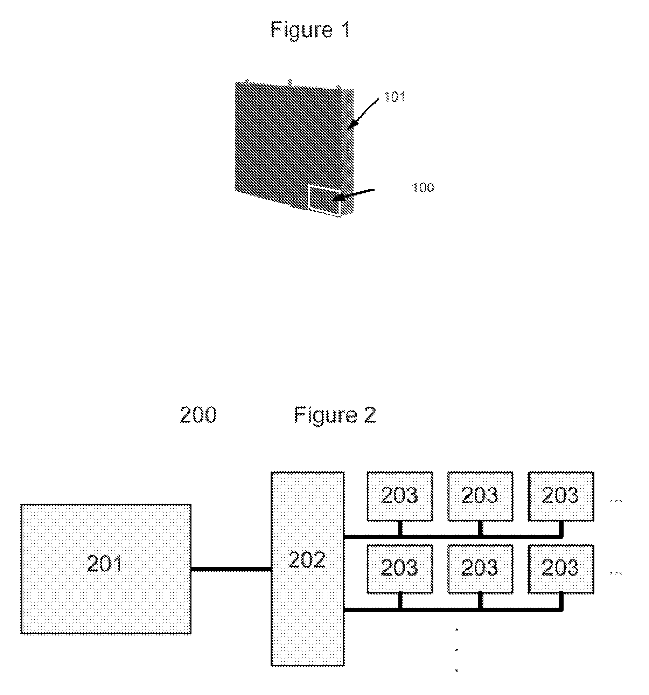

In one aspect, embodiments disclosed herein relate to a light-emitting display system including a panel and tiled light-emitting diode ("LED") modules.. Figure 1 illustrates one such LED Module **100** in relation to a panel case **101.** An LED Module may contain one or a plurality of pixels. A pixel may be made up of any number of LEDs where each LED may have a different color, for example, three LEDs that capture a spectrum of color. Examples may include a pixel having red, green, and blue LEDs, or a pixel having red, green, blue and cyan LEDs. The luminance and chromaticity of a pixel may be correlated to the relative light output of the individual LEDs within the pixel. Thus, by adjusting the relative outputs of the LEDs in a pixel, the luminance and chromaticity of the pixel may be controlled.

Figure 2 illustrates the topographical layout of a light-emitting display system **200** according to embodiments disclosed herein. The system includes a centralized display control module **201,** a panel control module **202,** and a series of pixels **203.** The panel control module is connected to the centralized display control module, in addition to each of the pixels. Further, multiple pixels may share a connection to the panel control module.

The pixels **203** may then each include non-volatile memory, such as electrically erasable programmable read-only memory ("EEPROM") or flash memory connected thereto. This "on-pixel" memory may be used to, for example, store correction information. The correction transformation information may include necessary information for using colorspace conversion techniques, such as a conversion transformation matrix describing the relationship between a source signal transmitted to the pixel and a destination signal displayed by the pixel or information pertaining to the optical characteristics of the individual LED elements from which correction transformation information can be determined.

Two basic designs are possible for computing colorspace conversions based on the correction transformation information stored in the individual pixels **203,** distributed and centralized computation. Embodiments in accordance with the present disclosure include centralized computation of the correction transformation information. Specifically, the centralized display control module **201** is used for the computation of the correction transformation information. Additionally, the centralized display control module may serve as the source of images and signals intended to be displayed on the light-emitting display system. Further, the centralized display control module includes a graphical processing unit ("GPU") that specializes in computations specific to graphics, including pixels.

According to one embodiment of the present disclosure, one or more of the pixels **203** may transmit the correction transformation information stored in each pixel **203** through the panel control module **202** to the centralized display control module **201** during a power-on phase of each of the pixels. The centralized control module **201** may then calculate a correction transformation matrix based on the received correction transformation information and store the correction transformation matrix in the GPU for later use.

When displaying information on the light-emitting display, the centralized control module **201** transmits an output signal to the panel control **202,** which then distributes the image or signal to the appropriate pixels **203** for display. Alternatively, the centralized control module **201** may transmit instructions to the panel control module **202** for distributing the image or signal among the pixels. However, to achieve uniformity among the display, the centralized control module **201** will first apply a correction transformation matrix to the source image or signal in order to get a corrected output signal.

Take, for example, equation 1:

$$
\begin{vmatrix} R_C \\ G_C \\ B_C \end{vmatrix} = CTM \bullet \begin{vmatrix} R_S \\ G_S \\ B_S \end{vmatrix} \text{ where } CTM = \begin{vmatrix} k_{RR} & k_{RG} & k_{RB} \\ k_{GR} & k_{GG} & k_{GB} \\ k_{BR} & k_{BG} & k_{BB} \end{vmatrix} \text{ [Eq.1]}
$$

In the examples, $R_C$, $G_C$, and $B_C$ represent red, green, and blue signals corresponding to red, green, and blue LEDs in a pixel that have been corrected to achieve color accuracy and uniformity in the display. $R_S$, $G_S$, and $B_S$ represent the red, green, and blue source signals that the centralized control module **203** intends to output on the display. *CTM* then represents the correction transformation matrix discussed above. The coefficients of the *CTM* are indicated by $k_{RR}$ ... $k_{BB}$. These coefficients are based on the color space conversion techniques cited in the background and known to those skilled in the art.

As can be seen, for a typical large scale display, the multiplications necessary in the centralized control module **201** may involve substantial computational capability. Accordingly, embodiments of the present disclosure may require a GPU to facilitate the computation of the corrected signals. A GPU may have specialized functions, such as pixel shaders, and use relatively high accuracy floating point arithmetic for all computations. Examples of GPUs include, for example, those produced by NVidia and ATI. Once the GPU has computed the corrected signals or image to be displayed, the centralized control module **201** may transmit the corrected signals or image to the panel control module **202** and on to the individual pixels **203.**

An alternate embodiment of the present disclosure may include deriving the correction transformation information for the pixels **203.** In this embodiment, the centralized display control module **201** may transmit a first source signal through the panel control module **202** to the pixels **203.** The pixels **203** then display a destination signal that may or may not contain optical variations from the first source signal due to variations in the pixels **203.** Next, an optical or electrical sensor may be used to measure optical or electrical properties, such as luminance, chromaticity, or spectral power density of one or more of the pixels **203.** Examples of optical or electrical sensors may include photometers, colorimeters, video cameras, digital cameras, and voltmeters. Chromaticity may be indirectly measured through the spectral power density. Luminance may be indirectly measured through the forward voltage of an LED. While this embodiment uses a photometer and colorimeter, one of ordinary skill in the art would recognize that there may be other available measuring devices. The measured optical or electrical properties may then be transmitted to the centralized display control module **201.**

Upon receiving the optical properties of the destination signal, the centralized display control module **201** may derive one or more correction transformation matrices based on the techniques discussed above with respect to colorspace conversions. These transformation matrices may be stored for later use in the GPU or transmitted back to the corresponding pixel **203** and stored in the pixel's non-volatile memory.

Subsequent images or signals that the centralized display control module **201** displays on the light-emitting display will first be sent to the GPU, where the GPU applies the appropriate correction transformations. Accordingly, subsequent signals sent from the centralized display control module **201** may be considered "corrected" signals. Corrected signals displayed on the light-emitting display have been transformed to account for the non-uniformity of the pixels **203** in the display to minimize perceived non-uniformity of the pixels by viewers.

Advantages of the present invention may include, for example, relatively low cost centralized computation resulting from the use of a GPU for computation resulting from transformations. Further, in addition to the low cost for centralized computation, GPUs have higher computational accuracy for floating point arithmetic, as compared to various other components used in distributed computing. The use of a centralized GPU also reduces the cost of hardware necessary for each individual panel or pixel in the light-emitting display. Finally, the correction transformation matrices may be updated in real-time in a central location, thereby allowing for the implementation of a closed loop control system.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

**Claims**

1. A method of correcting optical variations in a light-emitting display (200) having at least one pixel (203), **characterized in that** the method comprises:

   generating a source signal in a centralized display control module (201) comprising a GPU;
   applying a correction transformation to the source signal using the GPU, thereby creating a corrected signal; and
   displaying the corrected second signal within the light-emitting display.

2. The method of correcting optical variations in a light-emitting display (200) according to claim 1, wherein the correction transformation comprises a correction transformation matrix.

3. The method of correcting optical variations in a light-emitting display (200) according to claim 1, further comprising a step of storing correction transformation information to the at least one pixel.

4. The method of correcting optical variations in a light-emitting display (200) according to claim 1, wherein:

   the light-emitting display (200) has a plurality of pixels (203), and
   the method further comprises :

      transmitting a correction transformation information from at least one of the plurality of pixels to the centralized display control module(201) .
      determining the correction transformation based on the correction transformation information by using the centralized display control module (201).

5. The method of correcting optical variations in a light-emitting display (200) having a plurality of pixels according to claim 4, wherein the correction transformation information comprises optical or electrical information pertaining to the LEDs in each pixel.

6. The method of correcting optical variations in a light-emitting display (200) having a plurality of pixels according to claim 4, wherein the corrected signal is displayed within the at least one of the plurality of pixels of the light-emitting display.

7. The method of correcting optical variations in a light-emitting display (200) having a plurality of pixels according to claim 4, wherein the GPU uses a shader to modify the source signal based upon the correction transformation.

8. The method of correcting optical variations in a light-emitting display according to claim 4 wherein the correction transformation information is obtained by:

   transmitting a first signal from the centralized display control module to the light-emitting display;
   displaying a destination signal based on the first signal within the light-emitting display;
   measuring an optical or electrical property corresponding to the displayed destination signal from at least one of the plurality of pixels of the light-emitting display.

9. The method of correcting optical variations in a light-emitting display according to claim 8, wherein the measured optical property is an optical property selected from the group consisting of luminance and chromaticity.

10. The method of detecting optical variations in a light-emitting display according to claim 9, wherein the luminance is measured using a system selected from the group consisting of a photometer, a video camera and a digital camera.

11. The method of detecting optical variations in a light-emitting display according to claim 9, wherein the luminance is measured using electrical properties of the LED.

**12.** The method of detecting optical variations in a light-emitting display according to claim 9, wherein the chromaticity comprises three measured components based on the CIE 1391 color space.

**13.** The method of detecting optical variations in a light-emitting display according to claim 9, wherein the chromaticity is calculated from measured power spectral density.

**14.** The method of detecting optical variations in a light-emitting display according to claim 9, wherein the chromaticity is measured using a colorimeter.

**15.** A light-emitting display (200) with corrected optical variations, comprising:

a plurality of pixels (203);
a panel control module (202) connected to each of the plurality of pixels; and
a centralized screen control module (201) comprising a GPU connected to the panel control module (202).

**16.** The light-emitting display (200) according to claim 15, wherein the centralized screen control module (201) is a personal computer.

**17.** The light-emitting display according to claim 15, wherein at least one of the plurality of pixels (203) comprises one or more LEDs.

**18.** The light-emitting display according to claim 15, wherein one or more of the plurality of pixels (203) share a connection to the panel control module (202).

Figure 1

101

100

200        Figure 2

201

202

203    203    203    ...

203    203    203    ...

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6813853 B
- US 6704989 B
- US 6677918 B
- US 6314669 B

- US 5410328 A, Yoksza
- US 5268828 A, Masanobu Miura
- US 5785415 A, Matsumura

**Non-patent literature cited in the description**

- Derivation of Basic Television Color Equations. *SMPTE RP177,* 1993